(19) Europäisches Patentamt / European Patent Office / Office européen des brevets

(11) **EP 4 657 539 A1**

(12) **EUROPEAN PATENT APPLICATION**

(43) Date of publication:
03.12.2025 Bulletin 2025/49

(21) Application number: 25178114.2

(22) Date of filing: 22.05.2025

(51) International Patent Classification (IPC):
*H01M 4/13* (2010.01)   *H01M 4/131* (2010.01)
*H01M 4/525* (2010.01)   *H01M 10/0525* (2010.01)

(52) Cooperative Patent Classification (CPC):
**H01M 4/13; H01M 4/131; H01M 4/525;**
**H01M 10/0525;** H01M 4/50; H01M 2004/021;
H01M 2004/028

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 30.05.2024 CN 202410692240

(71) Applicant: Techtronic Cordless GP
Anderson, SC 29621 (US)

(72) Inventors:
• **HUANG, Xin Yue**
  **Dongguan City (CN)**
• **XU, Gang**
  **Dongguan City (CN)**

(74) Representative: **Meissner Bolte Partnerschaft**
**mbB**
**Patentanwälte Rechtsanwälte**
**Postfach 86 06 24**
**81633 München (DE)**

(54) **LITHIUM-ION BATTERY POSITIVE ELECTRODE AND LITHIUM-ION BATTERY**

(57)    The present invention relates to the field of lithium batteries, in particular to a lithium-ion battery positive electrode and a lithium-ion battery. The positive electrode comprises a positive electrode current collector and a positive electrode material on the positive electrode current collector, the positive electrode material comprising a positive electrode active material, the positive electrode active material at least comprising a polycrystalline ternary material and a monocrystalline ternary material, wherein the mass percentage content of nickel element in the polycrystalline ternary material is a, and the mass percentage content of nickel element in the monocrystalline ternary material is b; the median particle size $D_{50}$ of the polycrystalline ternary material is c $\mu$m, and the median particle size $D_{50}$ of the monocrystalline ternary material is d $\mu$m; the mass percentage proportion of the polycrystalline ternary material in the positive electrode active material is e, and the mass percentage proportion of the monocrystalline ternary material in the positive electrode active material is i; the area density of the positive electrode is f mg/cm$^2$; the porosity of the positive electrode is h; and a parameter j = c/d + 3e + b/a, characterized in that $80\% \leq e + i \leq 100\%$, $j/f \leq 2$ and $j/h \geq 20$. The lithium-ion battery with the abovementioned positive electrode has better C-rate performance and safety/stability.

**Description**

Technical Field

The present invention relates to the field of lithium batteries, in particular to a lithium-ion battery positive electrode and a lithium-ion battery.

Background Art

The C-rate performance and safety/stability of a lithium-ion battery are key battery properties, which are of interest to persons skilled in the art of lithium-ion batteries. Monocrystalline ternary materials and polycrystalline ternary materials are important materials for preparing positive electrodes for lithium-ion batteries. It is generally considered that monocrystalline ternary materials have better safety/stability than polycrystalline ternary materials, but monocrystalline ternary materials have lower C-rate performance.

To achieve higher C-rate performance and better safety/stability, the combined use of monocrystalline ternary materials and polycrystalline ternary materials would appear to be a better choice. However, the two types of materials do not have the same dynamic properties with regard to lithium ion diffusion, and simply using the two types in combination will not necessarily improve both the C-rate performance and the safety/stability. During charging, a polycrystalline ternary material, which has better dynamic properties, will reach a higher potential due to the effect of polarization, and the degree of delithiation will be higher, but at a high temperature and high voltage, the structure thereof is unstable, and oxygen atoms in the crystal lattice of the material readily separate out, accelerating the process of heat accumulation and thermal runaway of the battery; consequently, the battery has poor safety/stability. During discharging, those materials with poor dynamic properties cannot achieve complete discharge due to dynamic imbalance; the discharge capacity of the battery will be reduced, and the C-rate performance is poor.

Thus, there is an urgent need in the art for a lithium-ion battery positive electrode and a lithium-ion battery, to achieve better C-rate performance and safety/stability.

Summary of the Invention

The present invention provides a lithium-ion battery positive electrode and a lithium-ion battery which are capable of improving lithium battery C-rate performance and safety/stability.

In one aspect, the present invention provides a lithium-ion battery positive electrode, comprising a positive electrode current collector and a positive electrode material on the positive electrode current collector, the positive electrode material comprising a positive electrode active material, the positive electrode active material at least comprising a polycrystalline ternary material and a monocrystalline ternary material, wherein the mass percentage content of nickel element in the polycrystalline ternary material is a, and the mass percentage content of nickel element in the monocrystalline ternary material is b; the median particle size $D_{50}$ of the polycrystalline ternary material is c $\mu$m, and the median particle size $D_{50}$ of the monocrystalline ternary material is d $\mu$m; the mass percentage proportion of the polycrystalline ternary material in the positive electrode active material is e, and the mass percentage proportion of the monocrystalline ternary material in the positive electrode active material is i; the area density of the positive electrode is f mg/cm$^2$; the porosity of the positive electrode is h; and a parameter j = c/d + 3e + b/a.

In an embodiment, the mass percentage content of nickel element in the polycrystalline ternary material is a, 0.75 $\leq$ a $\leq$ 0.99; for example, a may be 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98 or 0.99, or a sub-range consisting of any values within these ranges; preferably, 0.8 $\leq$ a $\leq$ 0.95.

In an embodiment, the mass percentage content of nickel element in the monocrystalline ternary material is b, 0.75 $\leq$ b $\leq$ 0.99; for example, b may be 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98 or 0.99, or a sub-range consisting of any values within these ranges; preferably, 0.82 $\leq$ b $\leq$ 0.97.

In a preferred embodiment, the parameters a and b are the mass percentage contents of nickel element in the polycrystalline ternary material and the monocrystalline ternary material respectively, 0.75 $\leq$ a $\leq$ 0.99 and 0.75 $\leq$ b $\leq$ 0.99; more preferably, 0.8 $\leq$ a $\leq$ 0.95 and 0.82 < b $\leq$ 0.97.

In an embodiment, the parameters a and b are the mass percentage contents of nickel element in the polycrystalline ternary material and the monocrystalline ternary material respectively, b/a > 1; for example, b/a > 1.01, b/a > 1.02, b/a > 1.03, b/a > 1.04, or b/a > 1.05, or a sub-range consisting of any values within these ranges; preferably, b/a > 1.02.

In a preferred embodiment, the parameters a and b are the mass percentage contents of nickel element in the polycrystalline ternary material and the monocrystalline ternary material respectively, 0.75 $\leq$ a $\leq$ 0.99, 0.75 $\leq$ b $\leq$ 0.99, and

b/a >1; more preferably, $0.8 \leq a \leq 0.95$, $0.82 \leq b \leq 0.97$, and b/a > 1.

In an embodiment, the median particle size $D_{50}$ of the polycrystalline ternary material is c $\mu$m, $5 \leq c \leq 20$; for example, c may be 5, 6, 7, 8, 9, 10, 11, 12, 13, 14, 15, 16, 17, 18, 19 or 20, or a sub-range consisting of any values within these ranges; preferably, $10 \leq c \leq 15$.

In an embodiment, the median particle size $D_{50}$ of the monocrystalline ternary material is d $\mu$m, $0.5 \leq d \leq 8$; for example, d may be 0.5, 0.6, 0.7, 0.8, 0.9, 1.0, 1.5, 2, 2.5, 3, 3.5, 4, 4.5, 5, 5.5, 6, 6.5, 7, 7.5 or 8, or a sub-range consisting of any values within these ranges; preferably, $2 \leq d \leq 5$.

In a preferred embodiment, the parameters c and d are the median particle sizes $D_{50}$ ($\mu$m) of the polycrystalline ternary material and the monocrystalline ternary material respectively, $5 \leq c \leq 20$ and $0.5 \leq d \leq 8$; more preferably, $10 \leq c \leq 15$ and $2 \leq d \leq 5$.

In an embodiment, the mass percentage proportion of the polycrystalline ternary material in the positive electrode active material is e, $50\% \leq e \leq 95\%$; for example, e may be 50, 55, 60, 65, 70, 75, 80, 85, 90 or 95%, or a sub-range consisting of any values within these ranges; preferably, $60\% \leq e \leq 90\%$.

In an embodiment, the mass percentage proportion of the monocrystalline ternary material in the positive electrode active material is i, $5\% \leq i \leq 50\%$; for example, i may be 5, 10, 15, 20, 25, 30, 35, 40, 45 or 50%, or a sub-range consisting of any values within these ranges; preferably, $10\% \leq i \leq 40\%$.

In a preferred embodiment, the parameters e and i are the mass percentage proportions of the polycrystalline ternary material and the monocrystalline ternary material in the positive electrode active material respectively, $50\% \leq e \leq 95\%$ and $5\% \leq i \leq 50\%$; more preferably, $60\% \leq e \leq 90\%$ and $10\% \leq i \leq 40\%$.

In an embodiment, the parameters e and i are the mass percentage proportions of the polycrystalline ternary material and the monocrystalline ternary material in the positive electrode active material respectively, $80\% \leq e + i \leq 100\%$; for example, e + i may be 80, 85, 90, 95 or 100%; preferably, $90\% \leq e + i \leq 100\%$; most preferably, e + i = 100%.

In a preferred embodiment, the parameters e and i are the mass percentage proportions of the polycrystalline ternary material and the monocrystalline ternary material in the positive electrode active material respectively, $50\% \leq e \leq 95\%$, $5\% \leq i \leq 50\%$, and $90\% \leq e + i \leq 100\%$; more preferably, $60\% \leq e \leq 90\%$, $10\% \leq i \leq 40\%$, and e + i = 100%.

In an embodiment, the area density of the positive electrode is f mg/cm$^2$, $5 \leq f \leq 25$; for example, f may be 5, 6, 7, 8, 9, 10, 11, 12, 13, 14, 15, 16, 17, 18, 19, 20, 21, 22, 23, 24 or 25, or a sub-range consisting of any values within these ranges; preferably, $10 \leq f \leq 17$.

In an embodiment, the porosity of the positive electrode is h, $20\% \leq h \leq 35\%$; for example, h may be 20, 25, 30 or 35%, or a sub-range consisting of any values within these ranges; preferably, $21\% \leq h \leq 28\%$.

In an embodiment, the parameters a and b are the mass percentage contents of nickel element in the polycrystalline ternary material and the monocrystalline ternary material respectively, the parameters c and d are the median particle sizes $D_{50}$ ($\mu$m) of the polycrystalline ternary material and the monocrystalline ternary material respectively, the parameter e is the mass percentage proportion of the polycrystalline ternary material in the positive electrode active material, the parameter f is the area density (mg/cm$^2$) of the positive electrode, and the parameter j = c/d + 3e + b/a, $j/f \leq 2$; for example, j/f may be 2 1.9, 1.8, 1.7, 1.6, 1.5, 1.4, 1.3, 1.2, 1.1, 1.0, 0.9, 0.8, 0.7, 0.6, 0.5, 0.4, 0.3, 0.2 or 0.1, or a sub-range consisting of any values within these ranges; preferably, $j/f \leq 1.2$.

In an embodiment, the parameters a and b are the mass percentage contents of nickel element in the polycrystalline ternary material and the monocrystalline ternary material respectively, the parameters c and d are the median particle sizes $D_{50}$ ($\mu$m) of the polycrystalline ternary material and the monocrystalline ternary material respectively, the parameter e is the mass percentage proportion of the polycrystalline ternary material in the positive electrode active material, the parameter h is the porosity of the positive electrode, and the parameter j = c/d + 3e + b/a, $j/h \geq 20$; for example, j/h may be 20, 21, 22, 23, 24 or 25, or a sub-range consisting of any values within these ranges.

In a preferred embodiment, the parameters a and b are the mass percentage contents of nickel element in the polycrystalline ternary material and the monocrystalline ternary material respectively, the parameters c and d are the median particle sizes $D_{50}$ ($\mu$m) of the polycrystalline ternary material and the monocrystalline ternary material respectively, the parameter e is the mass percentage proportion of the polycrystalline ternary material in the positive electrode active material, the parameter f is the area density (mg/cm$^2$) of the positive electrode, the parameter h is the porosity of the positive electrode, and the parameter j = c/d + 3e + b/a, $j/f \leq 2$ and $j/h \geq 20$; more preferably, $j/f \leq 1.2$ and $j/h \geq 20$.

In a preferred embodiment, the parameters a and b are the mass percentage contents of nickel element in the polycrystalline ternary material and the monocrystalline ternary material respectively, the parameters c and d are the median particle sizes $D_{50}$ ($\mu$m) of the polycrystalline ternary material and the monocrystalline ternary material respectively, the parameter e is the mass percentage proportion of the polycrystalline ternary material in the positive electrode active material, the parameter i is the mass percentage proportion of the monocrystalline ternary material in the positive electrode active material, the parameter f is the area density (mg/cm$^2$) of the positive electrode, the parameter h is the porosity of the positive electrode, and the parameter j = c/d + 3e + b/a, $j/f \leq 2$, $j/h \geq 20$, and $80\% \leq e + i \leq 100\%$; more preferably, $j/f \leq 1.2$, $j/h \geq 20$, and $90\% \leq e + i \leq 100\%$.

In an embodiment, the compaction density of the positive electrode may be 3.2 - 3.7 g/cm$^3$, e.g. may be 3.2, 3.3, 3.4, 3.5, 3.6 or 3.7 g/cm$^3$, or a sub-range consisting of any values within these ranges.

In an embodiment, the monocrystalline ternary material is selected from at least one of monocrystalline lithium nickel cobalt manganese oxide and monocrystalline lithium nickel cobalt aluminium oxide. Preferably, the monocrystalline ternary material at least comprises monocrystalline lithium nickel cobalt manganese oxide. Most preferably, the monocrystalline ternary material is monocrystalline lithium nickel cobalt manganese oxide.

In an embodiment, the polycrystalline ternary material is selected from at least one of polycrystalline lithium nickel cobalt manganese oxide and polycrystalline lithium nickel cobalt aluminium oxide. Preferably, the polycrystalline ternary material at least comprises polycrystalline lithium nickel cobalt manganese oxide. Most preferably, the polycrystalline ternary material is polycrystalline lithium nickel cobalt manganese oxide.

In a preferred embodiment, the polycrystalline ternary material is selected from at least one of polycrystalline lithium nickel cobalt manganese oxide and polycrystalline lithium nickel cobalt aluminium oxide; the monocrystalline ternary material is selected from at least one of monocrystalline lithium nickel cobalt manganese oxide and monocrystalline lithium nickel cobalt aluminium oxide. More preferably, the polycrystalline ternary material at least comprises polycrystalline lithium nickel cobalt manganese oxide; the monocrystalline ternary material at least comprises monocrystalline lithium nickel cobalt manganese oxide. Most preferably, the polycrystalline ternary material is polycrystalline lithium nickel cobalt manganese oxide, and the monocrystalline ternary material is monocrystalline lithium nickel cobalt manganese oxide.

In a more preferred embodiment, the polycrystalline ternary material is polycrystalline lithium nickel cobalt manganese oxide, and the monocrystalline ternary material is monocrystalline lithium nickel cobalt manganese oxide, wherein:

the mass percentage content of nickel element in the polycrystalline lithium nickel cobalt manganese oxide is a, $0.75 \leq a \leq 0.99$, the mass percentage content of nickel element in the monocrystalline lithium nickel cobalt manganese oxide is b, $0.75 \leq b \leq 0.99$, and $b/a > 1$;

the median particle size $D_{50}$ of the polycrystalline lithium nickel cobalt manganese oxide is c $\mu$m, $5 \leq c \leq 20$, the median particle size $D_{50}$ of the monocrystalline lithium nickel cobalt manganese oxide is d $\mu$m, $0.5 \leq c \leq 8$;

the mass percentage proportion of the polycrystalline lithium nickel cobalt manganese oxide in the positive electrode active material is e, $50\% \leq e \leq 95\%$, the mass percentage proportion of the monocrystalline lithium nickel cobalt manganese oxide in the positive electrode active material is i, $5\% \leq i \leq 50\%$, $90\% \leq e + i \leq 100\%$;

the area density of the positive electrode is f mg/cm$^2$, $5 \leq f \leq 25$;

the porosity of the positive electrode is h, $20\% \leq h \leq 35\%$; and

the parameter $j = c/d + 3e + b/a$, $j/f \leq 2$, and $j/h \geq 20$;

on this basis, most preferably:

$0.8 \leq a \leq 0.95$, $0.82 \leq b \leq 0.97$ and $b/a > 1.02$;

$10 \leq c \leq 15$ and $2 \leq d \leq 5$;

$60\% \leq e \leq 90\%$, $10\% \leq i \leq 40\%$ and $e + i = 100\%$;

$$10 \leq f \leq 17;$$

$$21\% \leq h \leq 28\%;$$

and

the parameter $j = c/d + 3e + b/a$, $j/f \leq 1.2$ and $j/h \geq 20$.

In an embodiment, the lithium-ion battery positive electrode may be used in a secondary battery.

In an embodiment, the lithium-ion battery positive electrode may be used in any model of lithium battery, of any specification, e.g. cylindrical batteries (e.g. 21700, 14500, 18650, 18500, 26650, 21700, etc.), prismatic batteries (e.g. 3578131, 3463110, 3845120, 366090, 3435165, 2453135, etc.) and other lithium batteries of various models and specifications.

In addition, the inventors unexpectedly found that a positive electrode for a lithium-ion battery having a combination of features in the embodiments described above can improve the C-rate performance and safety/stability of the lithium-ion battery more effectively than the positive electrodes for lithium-ion batteries in the embodiments described above.

In another aspect, the present invention provides a lithium-ion battery, comprising a positive electrode for a lithium-ion battery as described above.

The lithium-ion battery with the abovementioned positive electrode has better C-rate performance and safe-

ty/stability.

<u>Detailed Description of the Invention</u>

Specific embodiments of the present invention are now described in detail. Only preferred embodiments of the present invention are described here; those skilled in the art could conceive of other ways of realizing the present invention on the basis of these preferred embodiments, such other ways likewise falling within the scope of the present invention. In some embodiments, to avoid confusion with the present invention, certain technical features which are well known in the art are not described.

Unless otherwise defined, all technical and scientific terms used in the present invention have the same meanings as commonly understood by those skilled in the art. In case of conflict, the present invention (including definitions) shall prevail. Only exemplary methods and materials are described below; methods and materials similar or equivalent to those described in the present invention may all be used in experiments or tests of the present invention. The materials, methods and examples disclosed in the present invention are merely illustrative, and not intended to be limiting.

In the present invention, the values may be rounded approximate values.

In the present invention, all defined interval ranges include endpoint values.

In the present invention, unless otherwise stated, each test is performed at room temperature. The parameters are all measured at room temperature. Said room temperature may be 10 - 35°C, preferably 20 - 30°C, and most preferably 25°C.

In the present invention, unless otherwise stated, any percentages, proportions, ratios, contents or numbers of parts mentioned are by weight.

**Lithium-ion battery**

An exemplary lithium-ion battery contains a casing, and the following accommodated within the casing: a positive electrode, a negative electrode, a separator and an electrolyte.

An exemplary lithium-ion battery may be a secondary battery.

An exemplary lithium-ion battery may be, for example, a cylindrical battery (e.g. 21700, 14500, 18650, 18500, 26650, 21700, etc.), a prismatic battery (e.g. 3578131, 3463110, 3845120, 366090, 3435165, 2453135, etc.) and other lithium batteries of various models and specifications.

**Positive electrode**

An exemplary positive electrode generally may contain a positive electrode material and a positive electrode current collector. The positive electrode material is formed on a surface of the positive electrode current collector. The positive electrode material may be formed on only one side of the positive electrode current collector, or on front and back sides of the positive electrode current collector.

An exemplary positive electrode material may for example have a thickness of 10 $\mu$m to 200 $\mu$m.

An exemplary positive electrode current collector may be aluminium foil. An exemplary positive electrode may for example be in the form of a sheet.

The compaction density of an exemplary positive electrode may be 3.2 - 3.7 g/cm$^3$, e.g. 3.2, 3.3, 3.4, 3.5, 3.6 or 3.7 g/cm$^3$, or a sub-range consisting of any values within these ranges.

An exemplary positive electrode material may contain a positive electrode active material, a binder and/or a conductive agent.

An exemplary positive electrode material may contain 90 wt% - 99 wt% positive electrode active material. An exemplary positive electrode material may also be substantially formed of positive electrode active material alone, or may contain optional components.

An exemplary positive electrode active material comprises at least one of lithium nickel cobalt manganese oxide, lithium manganese oxide, lithium cobalt oxide, lithium nickel oxide, lithium nickel cobalt aluminium oxide and lithium iron phosphate. Preferably, the positive electrode active material comprises at least one of lithium nickel cobalt manganese oxide and lithium nickel cobalt aluminium oxide.

An exemplary positive electrode active material at least comprises a polycrystalline ternary material and a monocrystalline ternary material.

An exemplary monocrystalline ternary material is selected from at least one of monocrystalline lithium nickel cobalt manganese oxide and monocrystalline lithium nickel cobalt aluminium oxide. Preferably, the monocrystalline ternary material at least comprises monocrystalline lithium nickel cobalt manganese oxide. Most preferably, the monocrystalline ternary material is monocrystalline lithium nickel cobalt manganese oxide.

An exemplary polycrystalline ternary material is selected from at least one of polycrystalline lithium nickel cobalt manganese oxide and polycrystalline lithium nickel cobalt aluminium oxide. Preferably, the polycrystalline ternary material at least comprises polycrystalline lithium nickel cobalt manganese oxide. Most preferably, the polycrystalline ternary material is polycrystalline lithium nickel cobalt manganese oxide.

The mass percentage content of nickel element in an exemplary polycrystalline ternary material is a, $0.75 \leq a \leq 0.99$; for example, a may be 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98 or 0.99, or a sub-range consisting of any values within these ranges.

The mass percentage content of nickel element in an exemplary monocrystalline ternary material is b, $0.75 \leq b \leq 0.99$; for example, b may be 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98 or 0.99, or a sub-range consisting of any values within these ranges.

The parameters a and b may have the following numerical relationship: $b/a > 1$; for example, $b/a > 1.01$, $b/a > 1.02$, $b/a > 1.03$, $b/a > 1.04$, or $b/a > 1.05$, or a sub-range consisting of any values within these ranges.

The median particle size $D_{50}$ of an exemplary polycrystalline ternary material is c $\mu$m, $5 \leq c \leq 20$; for example, c may be 5, 6, 7, 8, 9, 10, 11, 12, 13, 14, 15, 16, 17, 18, 19 or 20, or a sub-range consisting of any values within these ranges.

The median particle size $D_{50}$ of an exemplary monocrystalline ternary material is d $\mu$m, $0.5 \leq d \leq 8$; for example, d may be 0.5, 0.6, 0.7, 0.8, 0.9, 1.0, 1.5, 2, 2.5, 3, 3.5, 4, 4.5, 5, 5.5, 6, 6.5, 7, 7.5 or 8.

The mass percentage proportion of the polycrystalline ternary material in the positive electrode active material is e, $50\% \leq e \leq 95\%$; for example, e may be 50, 55, 60, 65, 70, 75, 80, 85, 90 or 95%, or a sub-range consisting of any values within these ranges.

The mass percentage proportion of the monocrystalline ternary material in the positive electrode active material is i, $5\% \leq i \leq 50\%$; for example, i may be 5, 10, 15, 20, 25, 30, 35, 40, 45 or 50%, or a sub-range consisting of any values within these ranges.

e and i may have the following numerical relationship: $80\% \leq e + i \leq 100\%$; for example, e + i may be 80, 85, 90, 95 or 100%.

The area density of an exemplary positive electrode is f mg/cm$^2$, $5 \leq f \leq 25$; for example, f may be 5, 6, 7, 8, 9, 10, 11, 12, 13, 14, 15, 16, 17, 18, 19, 20, 21, 22, 23, 24 or 25, or a sub-range consisting of any values within these ranges.

The porosity of an exemplary positive electrode is h, $20\% \leq h \leq 35\%$; for example, h may be 20, 25, 30 or 35%, or a sub-range consisting of any values within these ranges.

The compaction density of an exemplary positive electrode may be 3.2 - 3.7 g/cm$^3$, e.g. 3.2, 3.3, 3.4, 3.5, 3.6 or 3.7 g/cm$^3$, or a sub-range consisting of any values within these ranges.

The parameters a, b, c, d, e and f may have the following numerical relationship: the parameter $j = c/d + 3e + b/a$ is defined, $j/f \leq 2$; for example, $j/f$ may be 2, 1.9, 1.8, 1.7, 1.6, 1.5, 1.4, 1.3, 1.2, 1.1, 1.0, 0.9, 0.8, 0.7, 0.6, 0.5, 0.4, 0.3, 0.2 or 0.1, or a sub-range consisting of any values within these ranges.

The parameters j and h may have the following numerical relationship: $j/h \geq 20$; for example, $j/h$ may be 20, 21, 22, 23, 24 or 25, or a sub-range consisting of any values within these ranges.

An exemplary binder is selected from at least one of polyvinylidene fluoride (PVDF), carboxymethyl cellulose, styrene-butadiene rubber, polybenzimidazole, polyimide, polyvinyl acetate, polyacrylonitrile, polyvinyl alcohol, starch, hydroxypropylmethylcellulose, regenerated cellulose, polyvinylpyrrolidone, polyethylene, polypropylene, polystyrene, poly(methyl methacrylate), polyaniline, acrylonitrile-butadiene-styrene copolymer, phenolic resin, epoxy resin, polyethylene terephthalate, polytetrafluoroethylene, polyphenylene sulfide, polyamide-imide, polyetherimide, polyethylenesulfone, polyacetal, polyphenylene ether, polybutylene terephthalate, ethylene-propylene-diene terpolymer, sulfonated ethylene-propylene-diene terpolymer, fluorocarbon rubber and various copolymers. Preferably, it is selected from at least one of PVDF, carboxymethyl cellulose and styrene-butadiene rubber. As a preferred, non-limiting example, the binder is PVDF.

An exemplary positive electrode material may contain 0.1 wt% - 10 wt% of binder.

An exemplary conductive agent is selected from at least one of conductive carbon black, superconductive carbon black, carbon nanotubes, vapour-grown carbon fibres and graphite conductive agents. Preferably, the conductive agent is selected from conductive carbon black or superconductive carbon black. More preferably, the conductive agent is superconductive carbon black.

An exemplary positive electrode material may contain 0.1 wt% - 10 wt% of conductive agent.

An exemplary positive electrode may be prepared by applying a positive electrode slurry containing a positive electrode material (which may contain a positive electrode active material, a binder, a conductive agent and/or an additive) to a positive electrode current collector, and drying the slurry. The positive electrode material may be further compacted onto the current collector using a pressing method known to a person skilled in the art. An exemplary positive electrode slurry may be prepared by combining positive electrode material components (a positive electrode active material, a binder, a conductive agent and an additive) and adding a suitable solvent (e.g. N-methylpyrrolidone (NMP)).

**Negative electrode**

An exemplary negative electrode generally may contain a negative electrode material and a negative electrode current collector. An exemplary negative electrode material may contain a negative electrode active material, a binder, and/or a conductive agent. The negative electrode material is formed on a surface of the negative electrode current collector. The negative electrode material may be formed on only one side of the negative electrode current collector, or on front and back sides of the negative electrode current collector. The negative electrode material may for example have a thickness of 10 $\mu$m to 200 $\mu$m. There are no particular restrictions on the negative electrode active material, which may contain carbon, such as natural or artificial graphite. In various cases, an exemplary negative electrode active material may be a carbon composite material, such as a silicon-carbon composite material ("Si/carbon"). An exemplary negative electrode current collector is copper foil.

An exemplary negative electrode material may contain 90 wt% - 99 wt% of negative electrode active material. An exemplary negative electrode material may also be substantially formed of negative electrode active material alone.

An exemplary negative electrode may be prepared by applying a negative electrode slurry containing negative electrode material components (which may contain a negative electrode active material, a binder and a conductive agent) to a current collector, and drying the slurry on the current collector. The negative electrode material may be further compacted onto the current collector using a pressing method known to a person skilled in the art. An exemplary negative electrode slurry may be prepared by combining negative electrode material components (a negative electrode active material, a binder and a conductive agent) and adding a suitable solvent (e.g. NMP).

In addition, a binder and/or a conductive agent may optionally be contained in the negative electrode material, and may be the same (or substantially the same) as those described in relation to the positive electrode material, so are not described again in the present invention.

**Separator**

There are no particular restrictions on the separator of the lithium-ion battery of the present invention. An exemplary separator is a separator prepared from a polymer such as polypropylene (PP) or polyethylene (PE).

**Electrolyte**

In the lithium-ion battery of the present invention, there are no particular restrictions on the electrolyte. For example, it is a non-aqueous electrolyte; an exemplary non-aqueous electrolyte comprises one or more lithium (Li) salt and a non-aqueous solvent. For example, it is an organic electrolyte, prepared by dissolving a lithium salt in an organic solvent. The lithium salt may be any lithium salt commonly used in the art. An exemplary lithium salt is $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiCl$, $LiI$, $LiN(C_xF_{2x}+1SO_2)(C_yF_{2y}+1SO_2)$ (where x and y are natural numbers) or any mixture thereof. The organic solvent may be any suitable material that can be used as an organic solvent. An exemplary organic solvent is ethylene carbonate, vinylethylene carbonate, propylene carbonate, ethylene carbonate, fluoroethylene carbonate, butylene carbonate, dimethyl carbonate, diethyl carbonate, ethyl methyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a combination thereof.

In addition to the above-mentioned organic electrolyte, another exemplary electrolyte may be an organic solid electrolyte, an inorganic solid electrolyte, etc. Examples of the organic solid electrolyte include polyethylene derivatives, polyethylene oxide derivatives, polypropylene oxide derivatives, phosphate polymers, polyester sulfides, polyvinyl alcohol, PVDF, and polymers comprising ion dissociation groups. Examples of the inorganic solid electrolyte are nitride solid electrolytes, oxynitride solid electrolytes and sulfide solid electrolytes. Examples of the inorganic solid electrolyte are $Li_3N$, $LiI$, $Li_5NI_2$, $Li_3N$-$LiI$-$LiOH$, $Li_2SiS_3$, $Li_4SiO_4$, $Li_4SiO_4$-$LiI$-$LiOH$ and $Li_3PO_4$-$Li_2S$-$SiS_2$.

An exemplary lithium-ion battery may be made by using a method known to a person skilled in the art.

**Particular examples**

The examples below describe some embodiments of the present invention; they provide an illustration of the present invention, but the present invention is not limited to this.

A cylindrical secondary lithium-ion battery (type 21700) was made by the following method:

(1) Preparation of positive electrode plate: a positive electrode active material (monocrystalline and polycrystalline lithium nickel cobalt manganese oxide), superconductive carbon black as a conductive agent and PVDF as a binder were added to NMP, and mixed evenly to prepare a slurry; the positive electrode slurry was evenly applied to a surface of positive electrode current collector aluminium foil of thickness 15 μm, and dried at 100°C to remove NMP, to obtain a positive electrode plate coated with positive electrode material on one side. The above step was then repeated on the other surface of the aluminium foil, to obtain a positive electrode plate coated with positive electrode material on both sides. Roller pressing and cutting were then performed to obtain a positive electrode plate of specification 60.5mm × 1450mm. See **Table 1** below for information on relevant parameters of the positive electrode.

(2) Preparation of negative electrode plate: a negative electrode active material (88 wt.% artificial graphite and 12 wt.% silicon-carbon), a conductive agent (superconductive carbon black and single-walled carbon nanotubes), a binder (carboxymethylcellulose and styrene-butadiene rubber) and deionized water were mixed evenly to prepare a negative electrode slurry. The negative electrode slurry was then applied to a surface of negative electrode current collector copper foil of thickness 8 μm, and dried at 70°C to remove solvent, to obtain a negative electrode plate coated with negative electrode material on one side. The above step was then repeated on the other surface of the copper foil, to obtain a negative electrode plate coated with negative electrode material on both sides. Roller pressing and cutting were then performed to obtain a negative electrode plate of specification 62.5mm × 1500mm. The negative electrode had an area density of 6.9 mg/cm$^2$ and a compaction density of 1.55 g/cm$^3$.

(3) The positive electrode plate, the negative electrode plate and a ceramic separator (PE+Al$_2$O$_3$) were assembled by rolling to form a cylindrical rolled core, welded to collector plates, fitted into a steel casing and then subjected to groove rolling, baked for 24 h at a temperature of 80°C to remove moisture, then electrolyte was injected, and activation was performed by a suitable activation process to obtain a lithium battery.

Table 1: Lithium battery positive electrode parameter information

| Group | No. | Mass percentage content (a) of nickel element in polycrystalline lithium nickel cobalt manganese oxide (%) | Mass percentage content (b) of nickel element in monocrystalline lithium nickel cobalt manganese oxide (%) | D50 ($\mu$m) of particle size of polycrystalline lithium nickel cobalt manganese oxide | D50 ($\mu$m) of particle size of monocrystalline lithium nickel cobalt manganese oxide | Mass percentage proportion (e) of polycrystalline lithium nickel cobalt manganese oxide in positive electrode active material (%) | Area density (f) of positive electrode (mg/cm$^2$) | Compaction density of positive electrode (g/cm$^3$) | Porosity (h) of positive electrode (%) | 20h | Parameter j (d/c + 3e + b/a) | 6/5 f | 2f |
|---|---|---|---|---|---|---|---|---|---|---|---|---|---|
| A | 1 | 83 | 88 | 12.5 | 2.5 | 0.7 | 15 | 3.5 | 23 | 4.6 | 8.16 | 18 | 30 |
|  | 2 | 88 | 92 | 12.5 | 2.5 | 0.7 | 15 | 3.5 | 23 | 4.6 | 8.15 | 18 | 30 |
|  | 3 | 89 | 91 | 12.5 | 2.5 | 0.7 | 15 | 3.5 | 23 | 4.6 | 8.12 | 18 | 30 |
|  | 4 | 91 | 95 | 12.5 | 2.5 | 0.7 | 15 | 3.5 | 23 | 4.6 | 8.14 | 18 | 30 |
| B | 1 | 89 | 91 | 10.8 | 4.4 | 0.7 | 15 | 3.5 | 23 | 4.6 | 5.58 | 18 | 30 |
|  | 2 | 89 | 91 | 11.5 | 3.9 | 0.7 | 15 | 3.5 | 23 | 4.6 | 6.07 | 18 | 30 |
|  | 3 | 89 | 91 | 13.7 | 3.4 | 0.7 | 15 | 3.5 | 23 | 4.6 | 7.15 | 18 | 30 |
|  | 4 | 89 | 91 | 14.4 | 2.9 | 0.7 | 15 | 3.5 | 23 | 4.6 | 8.09 | 18 | 30 |
| C | 1 | 89 | 91 | 12.5 | 2.5 | 0.6 | 15 | 3.5 | 23 | 4.6 | 7.82 | 18 | 30 |
|  | 2 | 89 | 91 | 12.5 | 2.5 | 0.7 | 15 | 3.5 | 23 | 4.6 | 8.12 | 18 | 30 |
|  | 3 | 89 | 91 | 12.5 | 2.5 | 0.8 | 15 | 3.5 | 23 | 4.6 | 8.42 | 18 | 30 |
|  | 4 | 89 | 91 | 12.5 | 2.5 | 0.9 | 15 | 3.5 | 23 | 4.6 | 8.72 | 18 | 30 |
| D | 1 | 89 | 91 | 12.5 | 2.5 | 0.7 | 10 | 3.5 | 23 | 4.6 | 8.12 | 12 | 20 |
|  | 2 | 89 | 91 | 12.5 | 2.5 | 0.7 | 13 | 3.5 | 23 | 4.6 | 8.12 | 15.6 | 26 |
|  | 3 | 89 | 91 | 12.5 | 2.5 | 0.7 | 14 | 3.5 | 23 | 4.6 | 8.12 | 16.8 | 28 |
|  | 4 | 89 | 91 | 12.5 | 2.5 | 0.7 | 15 | 3.5 | 23 | 4.6 | 8.12 | 18 | 30 |
|  | 5 | 89 | 91 | 12.5 | 2.5 | 0.7 | 17 | 3.5 | 23 | 4.6 | 8.12 | 20.4 | 34 |

| Group | No. | Mass percentage content (a) of nickel element in polycrystalline lithium nickel cobalt manganese oxide (%) | Mass percentage content (b) of nickel element in monocrystalline lithium nickel cobalt manganese oxide (%) | D50 (μm) of particle size of polycrystalline lithium nickel cobalt manganese oxide | D50 (μm) of particle size of monocrystalline lithium nickel cobalt manganese oxide | Mass percentage proportion (e) of polycrystalline lithium nickel cobalt manganese oxide in positive electrode active material (%) | Area density (f) of positive electrode (mg/cm²) | Compaction density of positive electrode (g/cm³) | Porosity (h) of positive electrode (%) | 20h | Parameter j (d/c + 3e + b/a) | 6/5 f | 2f |
|---|---|---|---|---|---|---|---|---|---|---|---|---|---|
| F | 1 | 89 | 91 | 12.5 | 2.5 | 0.7 | 12 | 3.3 | 27 | 5.4 | 8.12 | 14.4 | 24 |
|  | 2 | 89 | 91 | 12.5 | 2.5 | 0.7 | 12 | 3.4 | 25 | 5.0 | 8.12 | 14.4 | 24 |
|  | 3 | 89 | 91 | 12.5 | 2.5 | 0.7 | 12 | 3.5 | 23 | 4.6 | 8.12 | 14.4 | 24 |
|  | 4 | 89 | 91 | 12.5 | 2.5 | 0.7 | 12 | 3.6 | 21 | 4.2 | 8.12 | 14.4 | 24 |
| G | 1 | 88 | 88 | 12.5 | 2.5 | 0.7 | 15 | 3.5 | 23 | 4.6 | 8.10 | 18 | 30 |
|  | 2 | 89 | 91 | 9.0 | 6.5 | 0.7 | 15 | 3.5 | 23 | 4.6 | 4.51 | 18 | 30 |
|  | 3 | 89 | 91 | 12.5 | 12.5 | 0.3 | 15 | 3.5 | 23 | 4.6 | 2.92 | 18 | 30 |
|  | 4 | 89 | 91 | 12.5 | 2.5 | 1 | 15 | 3.5 | 23 | 4.6 | 9.02 | 18 | 30 |
|  | 5 | 89 | 91 | 12.5 | 12.5 | 0.7 | 18 | 3.5 | 23 | 4.6 | 4.12 | 21.6 | 36 |
|  | 6 | 89 | 91 | 12.5 | 12.5 | 0.7 | 15 | 3.8 | 19 | 3.8 | 4.12 | 18 | 30 |

* Mass percentage proportion (i) of monocrystalline lithium nickel cobalt manganese oxide in positive electrode active material (%) = 1 - e

EP 4 657 539 A1

The lithium batteries in groups A - G prepared as described above were subjected to subsequent testing to measure their C-rate performance and safety.

**Test Example 1 Temperature rise test for 8C discharge**

In this test, the lithium-ion batteries were discharged at a high C-rate to test the temperature rise characteristics of the batteries, in order to gauge the C-rate performance of the batteries.

The lithium batteries in groups A - G prepared as described above were discharged at 8C, and their temperature rise characteristics were tested. A lower temperature rise indicated better C-rate performance of the battery.

The specific testing procedure was as follows:

1) The testing temperature was 25°C $\pm$ 3, and the apparatus used was a commercially available lithium battery charging/discharging test apparatus;

2) the battery was charged at 3C at constant current to 4.2 V, charged at constant voltage to 0.05 C, and left to stand for 30 min;

3) constant-current discharging at 8C current to 2.5 V was performed.

An external temperature probe was used to monitor variation in temperature in a middle surface region of a main body of the lithium-ion battery during the discharge process of step 3), and the highest temperature during the discharge process was collected. See Table 2 below for specific results.

**Table 2 Results of temperature rise test for 8C discharge**

| Group | No. | Temperature rise for 8C discharge (°C) |
|---|---|---|
| A | 1 | 45.3 |
|  | 2 | 44.0 |
|  | 3 | 46.4 |
|  | 4 | 42.5 |
| B | 1 | 39.1 |
|  | 2 | 41.1 |
|  | 3 | 43.0 |
|  | 4 | 46.7 |
| C | 1 | 40.9 |
|  | 2 | 41.8 |
|  | 3 | 43.2 |
|  | 4 | 43.6 |
| D | 1 | 33.0 |
|  | 2 | 37.6 |
|  | 3 | 39.5 |
|  | 4 | 41.8 |
|  | 5 | 45.0 |
| F | 1 | 34.7 |
|  | 2 | 39.5 |
|  | 3 | 41.5 |
|  | 4 | 43.9 |

(continued)

| Group | No. | Temperature rise for 8C discharge (°C) |
|---|---|---|
| G | 1 | 43.0 |
| | 2 | 50.0 |
| | 3 | 55.0 |
| | 4 | 40.0 |
| | 5 | 54.0 |
| | 6 | 57.0 |

It can be seen from Table 2 that groups A - F had better temperature rise results than group G; in groups A - F, the maximum temperature rise was not more than 47°C, whereas in group G, the temperature rise was more than 50°C for numbers 2, 3, 5 and 6. This indicates that groups A - F had better C-rate performance.

**Test Example 2 Overcharge test at 2C and 6 V**

The main purpose of this test was to gauge the safety/stability of the lithium-ion batteries under overcharge conditions.

Overcharging of a lithium-ion battery will not only cause irreversible damage to the battery assembly, but might also cause serious safety issues such as smoking, explosion or combustion. If overcharging occurs, a series of secondary reactions will take place at the positive and negative electrodes, and heat generation in the battery will increase sharply; when heat accumulation reaches a certain level, the separator will contract, causing an internal short circuit, and the battery will experience thermal runaway. The inventors have found that the positive electrode material plays a critical role in whether the battery is able to pass the overcharge test.

For each number in groups A - G, 20 lithium batteries were separately subjected to overcharge testing at 2C and 6 V.

Test conditions: the battery was discharged to 2.5 V, charged to 6 V with constant current at 2C, then charged at constant voltage for 30 minutes before stopping.

If a battery emitted smoke, exploded or caught fire during the test, the battery was determined as having failed the test. The specific experimental results are shown in **Table 3.**

**Table 3 Results of overcharge test at 2C and 6 V**

| Group | No. | Pass rate of overcharge test at 2C and 6 V (no. of batteries that pass/total no. of batteries) |
|---|---|---|
| A | 1 | 20/20 |
| | 2 | 20/20 |
| | 3 | 20/20 |
| | 4 | 20/20 |
| B | 1 | 20/20 |
| | 2 | 20/20 |
| | 3 | 20/20 |
| | 4 | 20/20 |
| C | 1 | 20/20 |
| | 2 | 20/20 |
| | 3 | 20/20 |
| | 4 | 20/20 |

(continued)

| Group | No. | Pass rate of overcharge test at 2C and 6 V (no. of batteries that pass/total no. of batteries) |
|---|---|---|
| D | 1 | 20/20 |
|  | 2 | 20/20 |
|  | 3 | 20/20 |
|  | 4 | 20/20 |
|  | 5 | 20/20 |
| F | 1 | 20/20 |
|  | 2 | 20/20 |
|  | 3 | 20/20 |
|  | 4 | 20/20 |
| G | 1 | 15/20 |
|  | 2 | 20/20 |
|  | 3 | 20/20 |
|  | 4 | 3/20 |
|  | 5 | 20/20 |
|  | 6 | 20/20 |

It can be seen from Table 3 that groups A - F all passed the test, whereas in group G, numbers 1 and 4 did not fully pass the test; this indicates that groups A - F had better overcharge performance, and better safety/stability.

**Test Example 3 Hot box test at 130°C**

The purpose of the hot box test was to evaluate the safety, in terms of thermal stability, of the lithium-ion batteries under extreme conditions (a high temperature of 130°C); this is also a requirement of the national standard for lithium-ion batteries.

Under high-temperature conditions, the positive and negative electrodes and the electrolyte will also experience a series of secondary reactions, with continuous generation of heat inside the battery; when heat accumulation reaches a certain level, the separator will contract, causing an internal short circuit, and the battery will experience thermal runaway.

For each number in groups A - G, 20 lithium batteries were separately subjected to hot box testing at 130°C.

Test conditions: battery state: 100% SOC; the battery is placed in a thermostatic box, the temperature is raised to 130°C $\pm$ 2 at a rate of 5°C/min and then held constant for 30 min. The experimental results are shown in **Table 4.**

If a battery emitted smoke, exploded or caught fire during the test, the battery was determined as having failed the test.

**Table 4 Results of hot box test at 130°C**

| Group | No. | Pass rate of hot box test at 130°C (no. of batteries that pass/total no. of batteries) |
|---|---|---|
| A | 1 | 20/20 |
|  | 2 | 20/20 |
|  | 3 | 20/20 |
|  | 4 | 20/20 |
| B | 1 | 20/20 |
|  | 2 | 20/20 |
|  | 3 | 20/20 |
|  | 4 | 20/20 |

(continued)

| Group | No. | Pass rate of hot box test at 130°C (no. of batteries that pass/total no. of batteries) |
|---|---|---|
| C | 1 | 20/20 |
| | 2 | 20/20 |
| | 3 | 20/20 |
| | 4 | 20/20 |
| D | 1 | 20/20 |
| | 2 | 20/20 |
| | 3 | 20/20 |
| | 4 | 20/20 |
| | 5 | 20/20 |
| F | 1 | 20/20 |
| | 2 | 20/20 |
| | 3 | 20/20 |
| | 4 | 20/20 |
| G | 1 | 13/20 |
| | 2 | 20/20 |
| | 3 | 20/20 |
| | 4 | 7/20 |
| | 5 | 20/20 |
| | 6 | 20/20 |

It can be seen from Table 4 that groups A - F all passed the test, whereas in group G, numbers 1 and 4 did not fully pass the test; this indicates that groups A - F had better safety in terms of thermal stability under extreme conditions (a high temperature of 130°C), so had better safety/stability.

**Claims**

1.  Lithium-ion battery positive electrode, comprising a positive electrode current collector and a positive electrode material on the positive electrode current collector, the positive electrode material comprising a positive electrode active material, the positive electrode active material at least comprising a polycrystalline ternary material and a monocrystalline ternary material, wherein the mass percentage content of nickel element in the polycrystalline ternary material is a, and the mass percentage content of nickel element in the monocrystalline ternary material is b; the median particle size $D_{50}$ of the polycrystalline ternary material is c $\mu$m, and the median particle size $D_{50}$ of the monocrystalline ternary material is d $\mu$m; the mass percentage proportion of the polycrystalline ternary material in the positive electrode active material is e, and the mass percentage proportion of the monocrystalline ternary material in the positive electrode active material is i; the area density of the positive electrode is f mg/cm$^2$; the porosity of the positive electrode is h; and a parameter j = c/d + 3e + b/a, **characterized in that** the abovementioned parameters at least satisfy the following numerical relationships: 80% $\leq$ e + i $\leq$ 100%; j/f $\leq$ 2, preferably, j/f $\leq$ 1.2; and j/h $\geq$ 20.

2.  Lithium-ion battery positive electrode according to Claim 1, wherein 0.75 $\leq$ a $\leq$ 0.99; preferably, 0.8 $\leq$ a $\leq$ 0.95.

3.  Lithium-ion battery positive electrode according to any one of the preceding claims, wherein 0.75 $\leq$ b $\leq$ 0.99; preferably, 0.82 $\leq$ b $\leq$ 0.97.

4.  Lithium-ion battery positive electrode according to any one of the preceding claims, wherein b/a > 1; preferably, b/a > 1.02.

5. Lithium-ion battery positive electrode according to any one of the preceding claims, wherein $5 \leq c \leq 20$; preferably, $10 \leq c \leq 15$.

6. Lithium-ion battery positive electrode according to any one of the preceding claims, wherein $0.5 \leq d \leq 8$; preferably, $2 \leq d \leq 5$.

7. Lithium-ion battery positive electrode according to any one of the preceding claims, wherein $50\% \leq e \leq 95\%$; preferably, $60\% \leq e \leq 90\%$.

8. Lithium-ion battery positive electrode according to any one of the preceding claims, wherein $5\% \leq i \leq 50\%$; preferably, $10\% \leq i \leq 40\%$.

9. Lithium-ion battery positive electrode according to any one of the preceding claims, wherein $90\% \leq e + i \leq 100\%$; preferably, $e + i = 100\%$.

10. Lithium-ion battery positive electrode according to any one of the preceding claims, wherein $5 \leq f \leq 25$; preferably, $10 \leq f \leq 17$.

11. Lithium-ion battery positive electrode according to any one of the preceding claims, wherein $20\% \leq h \leq 35\%$; preferably, $21\% \leq h \leq 28\%$.

12. Lithium-ion battery positive electrode according to any one of the preceding claims, wherein the compaction density of the positive electrode is 3.2 - 3.7 $g/_{cm}{}^3$.

13. Lithium-ion battery positive electrode according to any one of the preceding claims, wherein the monocrystalline ternary material is selected from at least one of monocrystalline lithium nickel cobalt manganese oxide and monocrystalline lithium nickel cobalt aluminium oxide; preferably, the monocrystalline ternary material at least comprises monocrystalline lithium nickel cobalt manganese oxide; most preferably, the monocrystalline ternary material is monocrystalline lithium nickel cobalt manganese oxide.

14. Lithium-ion battery positive electrode according to any one of the preceding claims, wherein the polycrystalline ternary material is selected from at least one of polycrystalline lithium nickel cobalt manganese oxide and polycrystalline lithium nickel cobalt aluminium oxide; preferably, the polycrystalline ternary material at least comprises polycrystalline lithium nickel cobalt manganese oxide; most preferably, the polycrystalline ternary material is polycrystalline lithium nickel cobalt manganese oxide.

15. Lithium-ion battery, comprising the lithium-ion battery positive electrode according to any one of Claims 1 - 14.

Europäisches
Patentamt

European
Patent Office

Office européen
des brevets

**EUROPEAN SEARCH REPORT**

Application Number

EP 25 17 8114

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 312 288 A1 (CONTEMPORARY AMPEREX TECHNOLOGY CO LTD [CN]) 31 January 2024 (2024-01-31) * paragraphs [0102], [0103]; example 1; table 1 * | 1-15 | INV. H01M4/13 H01M4/131 H01M4/525 H01M10/0525 |
| A | US 2022/093916 A1 (YAO ADRIAN [US] ET AL) 24 March 2022 (2022-03-24) * paragraphs [0059] - [0082] * | 1-15 | |
| A | CN 113 921 782 A (NINGBO RONBAY LITHIUM BATTERY MATERIAL CO LTD) 11 January 2022 (2022-01-11) * examples 1, 4 * | 1-15 | |

**TECHNICAL FIELDS SEARCHED (IPC)**

H01M

The present search report has been drawn up for all claims

| Place of search | Date of completion of the search | Examiner |
|---|---|---|
| Munich | 17 October 2025 | Lavorenti, Marek |

EPO FORM 1503 03.82 (P04C01)

## ANNEX TO THE EUROPEAN SEARCH REPORT
## ON EUROPEAN PATENT APPLICATION NO.

EP 25 17 8114

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2025

| Patent document cited in search report | | Publication date | Patent family member(s) | | Publication date |
|---|---|---|---|---|---|
| EP 4312288 | A1 | 31-01-2024 | CN | 118140328 A | 04-06-2024 |
| | | | EP | 4312288 A1 | 31-01-2024 |
| | | | JP | 7713033 B2 | 24-07-2025 |
| | | | JP | 2024524821 A | 09-07-2024 |
| | | | KR | 20230168282 A | 13-12-2023 |
| | | | US | 2024055579 A1 | 15-02-2024 |
| | | | WO | 2023230985 A1 | 07-12-2023 |
| US 2022093916 | A1 | 24-03-2022 | NONE | | |
| CN 113921782 | A | 11-01-2022 | NONE | | |

EPO FORM P0459

For more details about this annex : see Official Journal of the European Patent Office, No. 12/82